# EUROPEAN PATENT SPECIFICATION

(11) **EP 2 262 117 B1**
(45) Date of publication and mention of the grant of the patent: **20.02.2013**
(21) Application number: 10181272.5
(22) Date of filing: 29.08.2005
(51) Int. Cl.: H04B 1/38

(54) **Product for carrying audio and telephonic communication devices**
Vorrichtung zum Tragen von Audio- und Telefoneinrichtungen
Produit pour transporter des dispositifs audio et téléphoniques

(43) Date of publication of application: 15.12.2010
(62) Divisional of application: 05018728.5
(73) Proprietor: Skullcandy, Inc., Park City, UT 84098 (US)
(72) Inventor: Alden, Richard P., Park City, UT 841098 (US)
(74) Representative: Schröer, Gernot H.

(56) References cited:
- WO-A-03/099061
- WO-A-2004/025829
- WO-A-2004/107141
- GB-A- 2 365 692
- US-A1- 2001 050 991

## Description

### BACKGROUND OF THE INVENTION

### 1. The Field of the Invention

This invention relates to integrating electronic devices and, more particularly, to novel systems and methods for integrating services provided by personal music players and mobile phones.

### 2. The Background Art

The use of mobile telephones and other wireless communication devices has increased dramatically in recent years. Likewise, electronic music players, such as MP3, CD, DVD, and like players have proliferated. Some companies have attempted to integrate music players and mobile two-way communication devices into single devices. While integration may reduce the number of devices a user is required to carry, a user may unnecessarily discard devices that are still fully functional, incurring unnecessary expense.

With respect to music players and mobile phones, various conflicts may arise when attempting to operate independent devices simultaneously. For example, users may listen to portable music players while exercising, traveling, working, relaxing, and performing like activities. However, users may desire to simultaneously place and receive phone calls, activities that may be inherently difficult to perform while listening to music or other audio material. For example, a user may be unable to hear a phone ring while listening to music using headphones, earphones, or the like. Moreover, if a user is able to accept a call, the user may be required to remove headphones, reduce the volume of or mute a music player, pick up a mobile phone handset, or like actions, in order to accept or place a call. This may be an excessively clumsy process.

What is needed is apparatus and methods for users to simultaneously accept and place phone calls using a mobile phone or other two-communication device while listening to music, or other audio material using an independent audio delivery device.

What is further needed is apparatus and methods to integrate the services of substantially any arbitrary two-way communication device with substantially any arbitrary music or audio delivery device.

An example of a known apparatus is disclosed in US 2001/0050991.

### SUMMARY OF THE INVENTION

Embodiments of the present invention include apparatus and methods for integrating two-way communication devices with audio delivery devices, and within one or more articles of manufacture, such as a jacket, backpack, helmet, or the like. An apparatus in accordance with the invention may include a first electrical connector connected to receive a first audio signal from a substantially arbitrarily selectable audio delivery device, such as an MP3, CD, DVD, radio, or other media player. A second electrical connector may be connected to receive a second audio signal from a substantially arbitrarily selectable two-way communication device, such as a mobile phone, or a two-way radio such as a walkie talkie, citizen band radio (e.g. CB), HAM radio, marine and aviation radio, and the like.

A coupling device independent from the audio and two-way communication devices may be connected to receive the first and second audio signals. A third audio signal comprising at least one of the first and second audio signals may be transmitted from the coupling device to an acoustic device, such as headphones, earphones, speakers, or the like to convert the third audio signal to an acoustic wave having an audio range corresponding to a hearing range of a user.

In certain embodiments, a switch may be connected to the apparatus to enable a user to selectively switch between the first and second audio signals to provide the third audio signal to the acoustic device. In other embodiments, a mixer may be connected to the apparatus to mix the first and second audio signals to create the third audio signal.

In selected embodiments, the apparatus may include a microphone connected to transmit a voice signal of a user to the two-way communication device. Thus, the two-way communication device may be located away from the face of the user. The apparatus may also include a volume controller connected to selectively control the volume of at least one of the first and second audio signals. In certain embodiments, the volume controller may control the first audio signal (e.g. the audio signal originating from the audio delivery device) so that a user may selectively raise or lower the volume of the music or other media while receiving or placing a call.

In selected embodiments, the apparatus may employ electrical wiring to route the audio signals and the voice signal to and from the coupling device. A switch, selectively operable by a user, may be used to connect at least two of the second audio signal wire, the voice signal wire, and a ground wire, to activate a function of the two-way communication device. For example, if the two-way communication device is a mobile phone, the switch may be used to trigger a function of the mobile phone such as a mute command, a call connect command, a call disconnect command, voice-activated dialing, a command to call the last number dialed, and the like.

The coupling device may contain any or all of the hardware previously described including but not limited to the microphone, the switches, the mixer, and the volume controller. In selected embodiments, the audio signal from the two-way communication device may be characterized by a threshold value. The second audio signal may be accorded priority relative to the first audio signal originating from the audio delivery device. Thus, the second audio signal may interrupt the first audio signal upon reaching the threshold value.

An article of manufacture, such as a jacket, backpack, helmet, or the like, can then be configured to receive the two-way communication device, the audio delivery device, the coupling device, one or more wires (as appropriate), and one or more headphones, earphones, speakers. In some cases, one or more of the two-way communication device, the audio delivery device, and the one or headphones, earphones, or speakers communicate with each other through the coupling device using wireless communication means. These can also communicate via a combination of wired and wireless communication means.

### BRIEF DESCRIPTION OF THE DRAWINGS

The objects and features of the present invention will become more fully apparent from the following description, taken in conjunction with the accompanying drawings. Understanding that these drawings depict only typical embodiments of the invention and are, therefore, not to be considered limiting of its scope, the invention will be described with additional specificity and detail through use of the accompanying drawings in which:
FIG. 1 is a plan view of one embodiment of a personal portable integrator usable with a music player and a mobile phone;
FIG. 2 is a plan view of one embodiment of a personal portable integrator having a device-specific link to a two-way communication device;
FIG. 3 is a schematic block diagram illustrating one embodiment of connectors that may be used to adapt the invention to a wide variety of devices;
FIG. 4 is a schematic block diagram of one embodiment of an adapter that may be used to interface to a specific device;
FIG. 5 is a schematic block diagram of one embodiment of components contained within a coupling device in accordance with the invention;
FIG. 6 is a schematic block diagram of an alternative embodiment of components contained within a coupling device in accordance with the invention;
FIG. 7 is a schematic block diagram of another alternative embodiment of components contained within a coupling device in accordance with the invention;
FIG. 8 is a schematic block diagram of one embodiment of a personal portable integrator usable with a music player and a mobile phone using wireless technology;
FIG. 9A illustrates one implementation of an article of manufacture that is configured to integrate a music player and a mobile phone using wired or wireless technology; and
FIG. 9B illustrates another implementation of an article of manufacture that is configured to integrate a music player and a mobile phone using wired or wireless technology.

### DETAILED DESCRIPTION OF THE PREFERRED EMBODIMENTS

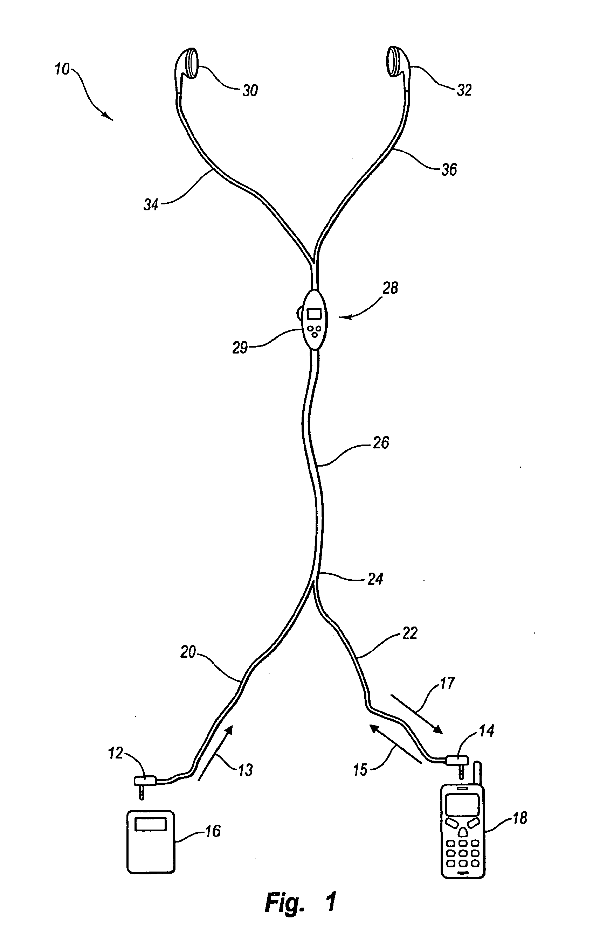

It will be readily understood that the components of the present invention, as generally described and illustrated in FIGS. 1 through 8 herein, could be arranged and designed in a wide variety of different configurations. Thus, the description herein is not intended to limit the scope of the invention, but is merely representative of certain presently preferred embodiments of devices and systems in accordance with the invention. Those of ordinary skill in the art will, of course, appreciate that various modifications to the details herein may easily be made without departing from the essential characteristics of the invention, as described. Thus, the following information is intended only by way of example, and simply illustrates certain presently preferred embodiments consistent with the invention.

Referring to FIG. 1, a portable integrator 10 for use with a two-communication device 18, such as a mobile phone 18, and an audio delivery device 16, such as a portable MP3 player or CD player, may include electrical connectors 12, 14 to interface with the devices 16, 18. The electrical connectors 12, 14 may vary according to the device. For example, an audio device 16 may require a jack 12 having specific dimensions and with a specified number of contact points. Likewise, a connector 14 may connect to a particular communication device 18. The connectors 12, 14 may be modified as needed to adapt to other devices 16, 18.

The connectors 12, 14 may be adapted to receive and provide signals 13, 15, 17 from the devices 16, 18. For example, the connector 12 may simply receive an audio signal 13 from the audio device 16. The signal 13 may be a monophonic, stereophonic, or like representation of an audio signal 13. Likewise, the connector 14 may receive an audio signal 15 from the communication device 18. In addition, the connector 14 may provide a voice signal 17, or other input signal 17, to the communication device 18 from a user thereof or other outside source.

Sheathed flexible wires 20, 22 or other transmission means such as optical fibers 20, 22, or wireless technology such as Bluetooth may be used to carry the signals 13, 15, 17 to and from the devices 16, 18. In certain embodiments, a reinforcement member 24 may be used to provide strength at a junction point 24 of the lines 20, 22. The reinforcement member 24 may also be used to form a transition point 24 where wires 20, 22 may be bundled together beneath a single protective sheathing 26.

A coupling device 28 may receive and transmit the signals 13, 15, 17 through the path 26. The coupling device 28 may act as a controller 28 or hub 28 to route the signals 13, 15, 17 to an acoustic device 30, 32, such as headphones 30, 32, earphones 30, 32, speakers 30, 32, or the like. The coupling device 28 may also contain a microphone 29, thus providing a hands free set 29, 30, 32, usable with a mobile phone 18. A pair of wires 34, 36 or other communication paths 34, 36 may connect the coupling device 28 to the acoustic device 30, 32.

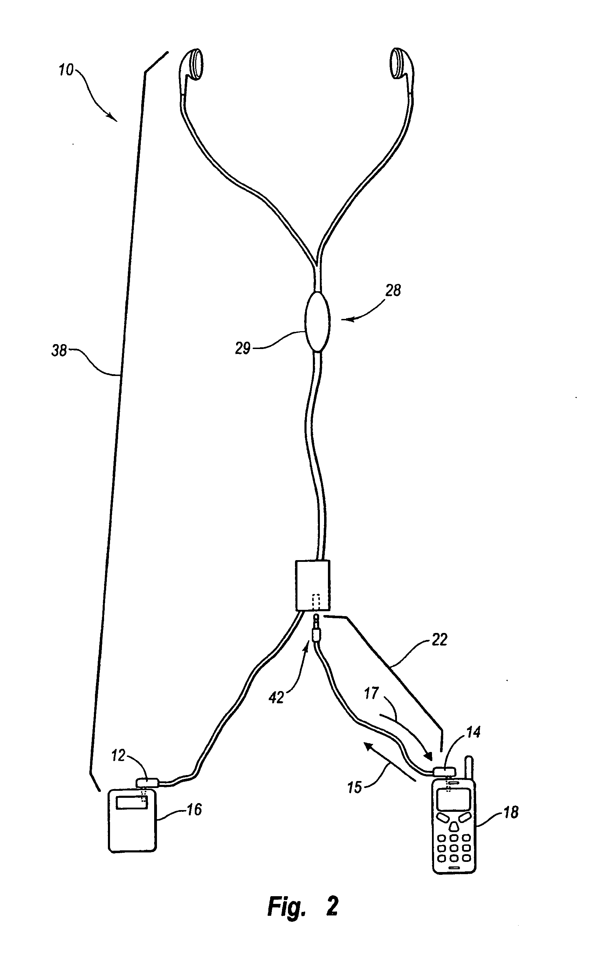

Referring to FIG. 2, as was previously mentioned, devices 16, 18, such as mobile phones 18, may not use a standardized jack 12, 14. However, it may be undesirable to provide a separate integrator device 10 for each variation of devices 12, 14 that may be available. Therefore, in certain embodiments, a portion 38 of the portable integrator 10 may be provided as a universal component 38 while another portion 40 may serve as a device-specific component 40. For example, audio devices 16 may use a standardized connector 12 or jack 12.

Therefore, a universal component 38 may adapt to the vast majority of audio devices 16 that may be available. Conversely, many two-way communication devices 18, such as mobile phones 18 may not have standardized connections 14. Therefore, device-specific components 40 may be provided having a standard connection 42 that may interface with the universal component 38, while another adapter 14 or connector 14 may be specific to the device 18.

In cases where devices 18 may have a varying number of inputs 17 and outputs 15, dead pins, wires (communication paths), and the like may by used as needed to increase or decrease the number of inputs 15 or outputs 17 according to specific devices 18. In addition, a user may only desire to use a single device 16 for a given period of time and may wish to remove the portion 40 until it is needed.

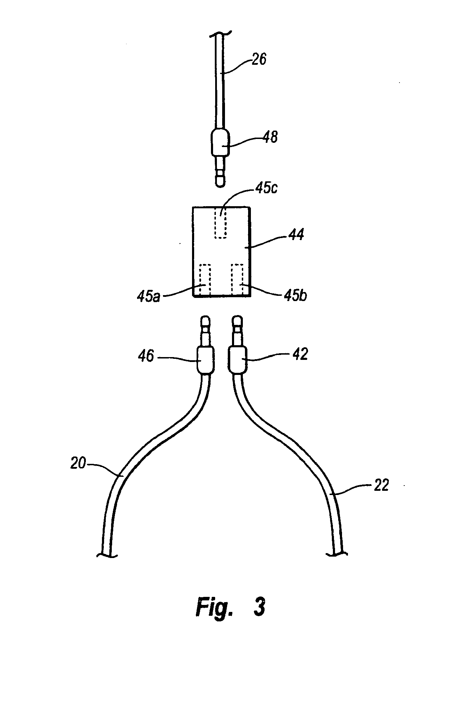

Referring to FIG. 3, while continuing to refer generally to FIGS. 1 and 2, adaptability of the integrator device 10 may be provided in various ways. For example, in certain embodiments, the integrator device 10 may include an adapter 44 that may provide an interface 44 to each of the devices 12, 18, 28, specifically through one or more individual interfaces 45a, 45b, and 45c. In selected embodiments, a connection 20 to an audio device 16 may be swapped at interface 45a with another connection 20 fitted for another device, a connection 22 to a communication device 18 may be swapped at interface 45b with another connection 22 fitted for another communication device 18, a coupling device 28 and an acoustic device 30, 32 may be swapped at interface 45c with other devices 28, 30, 32, and the like. As was previously mentioned, certain portions 26, 20, 22 may be added or deleted as needed by the user. The adapter 44 may use a variety of connectors 42, 46, 48 to connect to the adapter 44, and may also be configured to communicate wirelessly through each of interfaces 45a, 45b, and 45c. In particular, in certain embodiments, the adapter 44 may wirelessly communicate with each of the devices 16, 18 using a wireless technology, thereby acting as a wireless communication hub 44.

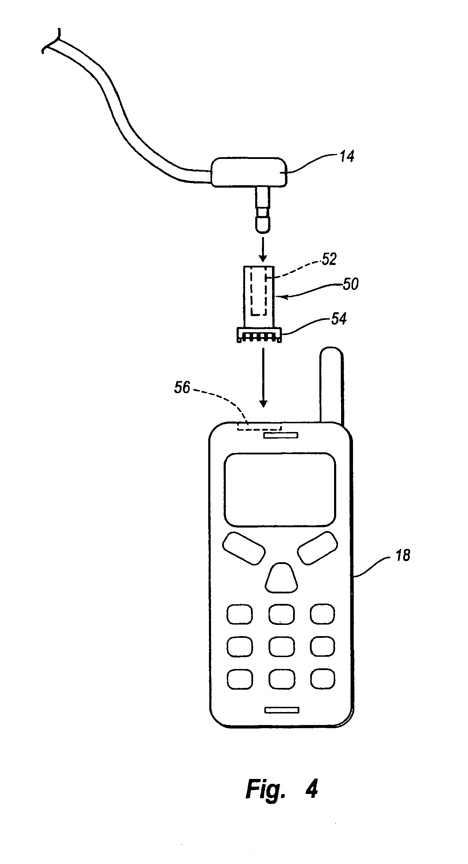

Referring to FIG. 4, in selected embodiments, adapters 50 may be provided in accordance with the invention to adapt a portable integrator 10 to specific devices 18. For example, an adapter 50 may include an interface 52 for interfacing with a connector 14. Likewise, the adapter 50 may include another interface 54 that may connect directly to a device 18 at an input 56. In addition, other features may be built into the adapter 50 such as impedance matching, signal amplification, and the like.

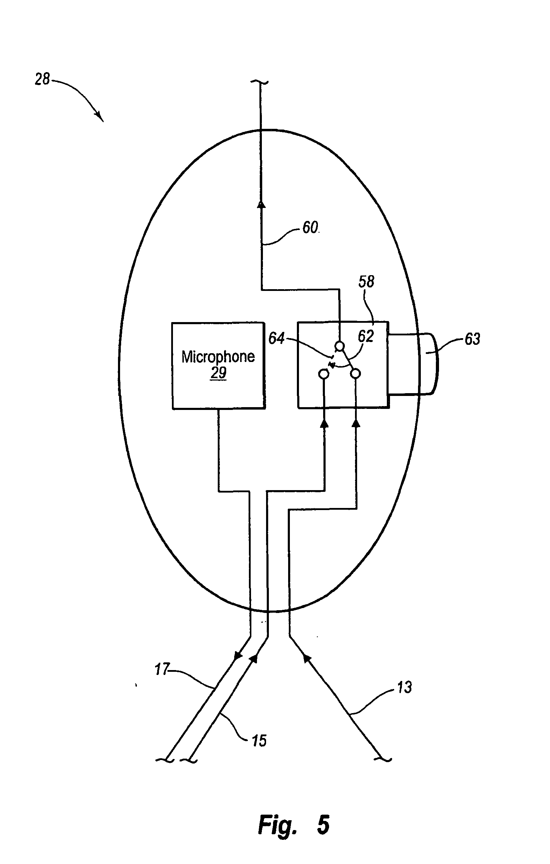

Referring to FIG. 5, in certain embodiments, the coupling device 28 may include a switch 58 to selectively enable a user to connect one of the signals 13, 15 through to the output 60. For example, a user may listen to an audio recording or live transmission from an audio device 16 with the switch 58 in a first position 62. If the user receives or desires to place a call, the switch 58 may be changed to a second position 64 to connect the communication device 18 through to the output 60. The switch 58 may include a button 63 or like mechanism 63 to enable a user operation thereof. Thus, the signal 13 from the audio device 16 may be conveniently and selectively disconnected while the user operates the communication device 18. In this way, simple operation of a switch 58 may enable a user to operate an audio delivery device 16 and a communication device 18 through a single acoustic device 30, 32.

The coupling device 28 may also include a microphone 29 to transmit a voice or other audio signal 17 back to the communication device 18. The coupling device 28 may contain one or several apertures to permit an acoustic wave to directly enter and drive the microphone 29. In certain embodiments, the coupling device 28 may be located, such as by clipping, proximate the face of a user so that the switch 58, microphone 29, and other controls located therein, may be easily accessed and used by a user. Likewise, the communication device 18 and audio device 16 may be located away from the user's face, clipped along a belt line, in a pocket, in a bag, or the like.

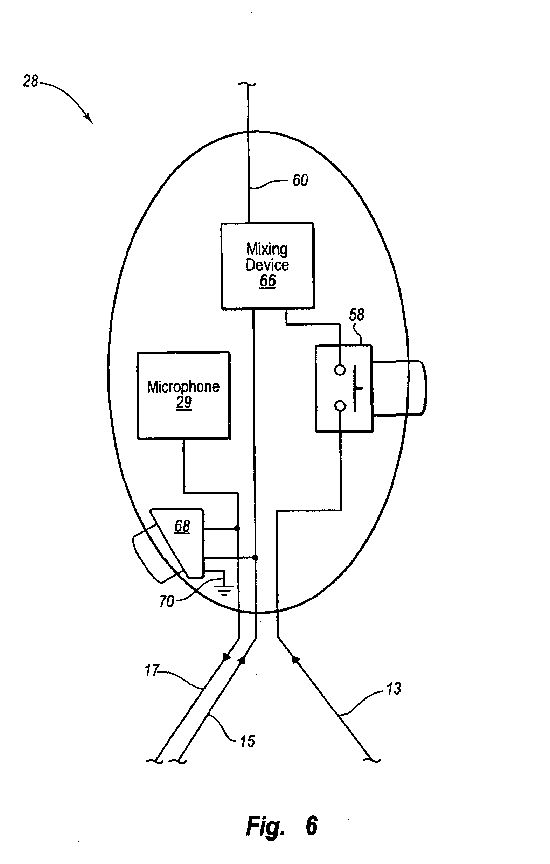

Referring to FIG. 6, in certain embodiments, the coupling device 28 may include a mixer 66 to mix the audio signals 13, 15 originating from the audio and communication devices 16, 18. Thus, the audio signals 13, 15 may be heard simultaneously by a user through an acoustic device 30, 32. In certain instances, a ring or other sound may indicate a call is being received by the communication device 18 and may by audible over the sound of the music or other media through the acoustic device 30, 32. In this case, the audio signal 13 from the audio device 16 may be muted or disconnected by a user with a switch 58 while the user receives or places a call. Once the call is finished, the user may once again trigger the switch to begin listening to music or other audible media. Thus, a user may simultaneously hear and monitor both devices 16, 18 through a single acoustic device 30, 32 and may mute or disconnect at least one of the devices 16, 18 when needed.

In certain embodiments, the coupling device 28 may also include a switch 68 or other control device 68 to control features of the communication device 18, the audio device 16, or a combination thereof. For example, a switch 68 may connect inputs 17 or outputs 15 of the communication device 18 together, connect them to a ground 70, provide control signals to the device 18, or the like, to control features of the communication device 18. For example, a switch 68 or control device 68 may control features of the communication device 18 such as performing a mute command, a call connect command, a call disconnect command, voice-activated dialing, a command to call the last number dialed, or like features. The features activated may vary from device 18 to device 18 and may depend on the device engineering and configuration.

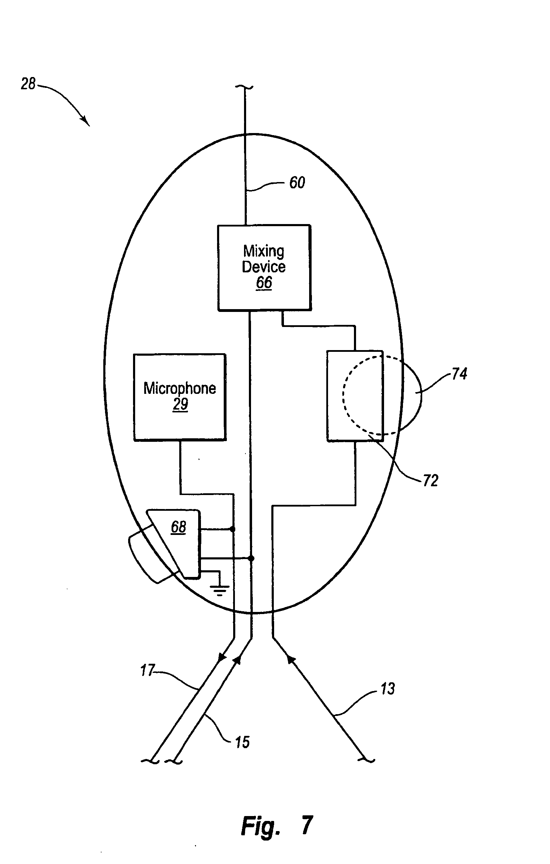

Referring to FIG. 7, in selected embodiments, the coupling device 28 may include a volume controller 72 to control the volume of at least one of the audio signals 13, 15 from the audio device 16 and the communication device 18. For example, as in the previous example, a mixer 66 may provide that audio signals 13, 15 be heard simultaneously by a user through an acoustic device 30, 32. When a call is received or placed on the communication device 18, a user may adjust the volume of the audio signal 13 using the volume controller 72. If desired, the user may adjust the volume such that music or audio material is still heard in the background while receiving or placing a call. Once a call is finished, a user may readjust the volume to a desired level. Thus, a user may simultaneously hear and monitor both devices through a single acoustic device 30, 32, and may adjust the volume of at least one of the devices 16, 18 when desired.

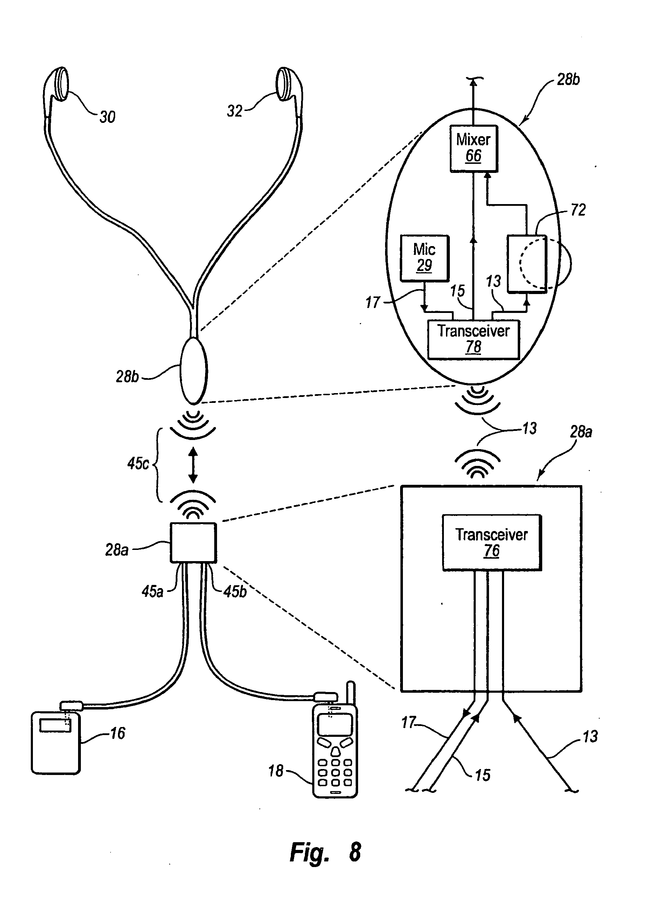

Referring to FIG. 8, in certain embodiments, a coupling device 28 may be divided into a pair of components 28a, 28b that wirelessly communicate with one another over one or more individual or combined interfaces 45c using a technology such as Bluetooth. For example, a first component 28a may include a transceiver 28a receptive to the signals 13, 15, 17 from the audio and communication devices 16, 18. The transceiver 76 may convert these signals to wirelessly transmittable frequencies 80 using an appropriate wireless protocol such that they may be transmitted to a peer transceiver 78. The transceiver 78 may then convert the frequencies 80 back to signals 13, 15, 17, where they may be processed by the coupling device 28b in accordance with a process like those described in FIGS. 5 through 7.

One of ordinary skill in the art will recognize that the wireless technology described in FIG. 8 may be used in a wide variety of different configurations and the example presented herein is not intended to limit the scope of the invention. For example, in certain embodiments, portions or all of the circuitry 29, 66, 72 or components 29, 66, 72 may be located in the housing 28a. In other embodiments, each of the devices 16, 18, may communicate wirelessly with the coupling device 28a at interfaces 45a and 45b.

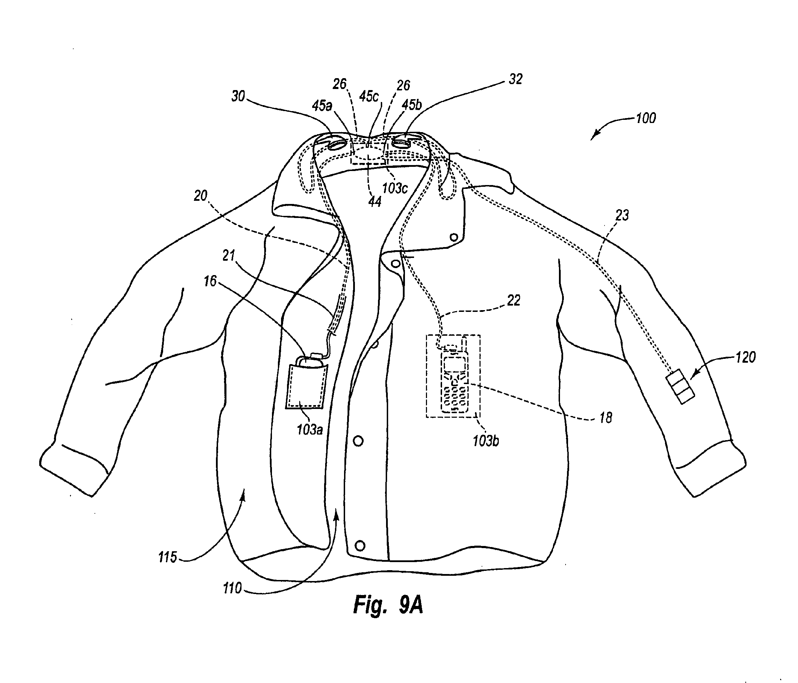

Still additional embodiments in accordance with the present invention relate to how the technology described herein can be used with, formed in, or otherwise removably coupled to various articles of manufacture for additional personal portability and convenience. For example, the device and technology described herein can be integrated seamlessly in an article of manufacture such as a jacket, coat, backpack, belt pack, helmet (or other head gear), shirt, pants, or the like. That is, the article (e.g., 100, 105, FIGs. 9A-9B) can be manufactured to include a number of internal or external pockets, receptacles, or channels for receiving various aspects of the device(s), wire(s), or control(s), such that the audio reception and transmission technology appears to be part of the article itself. The device can then be used with relative ease and comfort so that the user need not necessarily avoid use of the devices in difficult conditions, such as when skiing or biking, which could make the devices difficult to hold.

For example, as shown in FIGs. 9A - B, article 100, 105 has at least a first interface 45a of coupling device 44 for receiving communication from music player 16 (such as a portable MP3 player, tape player, CD player, or the like). This interface 45a can be a wired interface for receiving a stereo plug of any size, but can also be a wireless interface for receiving and/or transmitting wireless communication. In addition, article 100, 105 can include a second interface 45b for receiving a second audio signal from a substantially arbitrarily selectable two-way communication device 18. For example, FIGs. 9A - B show that coupling device 44 is communicably coupled to mobile phone 18 via wire 22. As with interface 45a, however, interface 45b can also be configured with primarily wireless communication means for communicating audio signals to and/or from device 18.

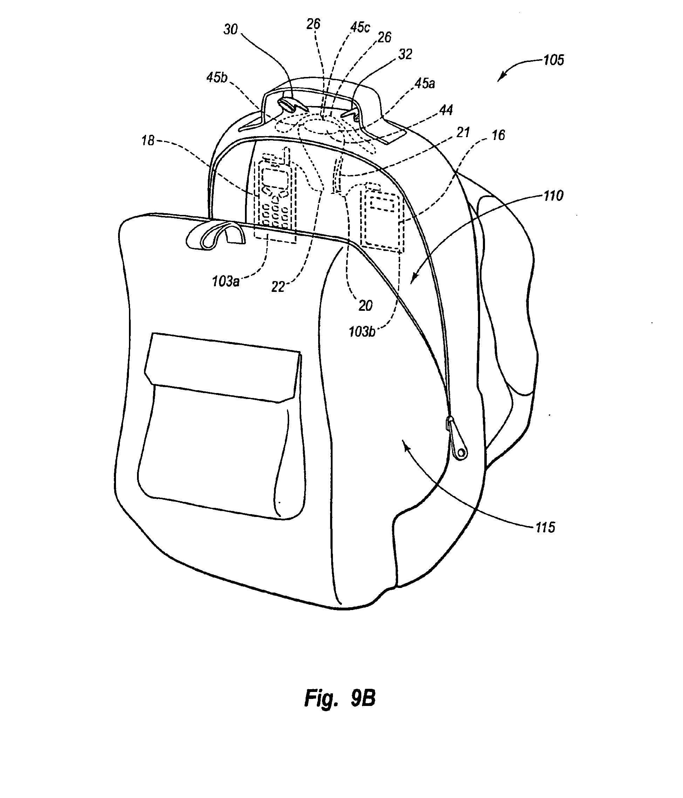

Article 100 can also include a third interface 45c for transmitting (and/or receiving) a third 60 audio signal comprising at least one of the first and second audio signals. For example, FIGs. 9A and 9B show that coupling device 44 receives audio signals from devices 16 and 18, and can send a third audio signal (one of the received first or second signals, or a combined first and second audio signal) through wires 26. As with interfaces 45a-b, third interface 45c can also send the third audio signal wirelessly, where appropriate, to corresponding acoustic devices.

In addition, article 100 can include acoustic device 30, 32, which can convert the audio signal from interface 45c into audible tones for article 100, 105 wearer. Acoustic device 30, 32 can be personal speakers that are inserted in (or built to surround) an ear, or can be larger speakers that are audible up to several feet away.

Additional embodiments of the invention can be shown or described in terms of inside and/or outside portions. For example, FIGs. 9A and 9B show that article 100, 105 includes a primarily inside portion 110 and a primarily outside portion 115. Inside portion 110, such as the inside of jacket 100 or backpack 115, further includes one or more receptacles (or pockets) 103a-b configured to receive an audio delivery device 16 and/or a two-way audio communication device 18. For example, pockets/receptacles 103a-b in Figures FIGs. 9A - 9B provide a secure resting place for audio delivery device 16 and mobile phone 18 within inside portion 110.

The article can also include a number of interfaces (not shown) 120 attached to the outside portion 115 for controlling any number of functions. The interfaces 120 can be communicably coupled to coupling device 44 via any number of wires (e.g., 23), or via wireless communication means. The interfaces 120 can provide direct communicative access to switch 58 and volume controller 72 inserted in a pocket (or sewn into) a sleeve, or directly coupled thereto. Switch 58 and volume controller 72 of interfaces 120 are, in turn, communicably connected to coupling device 28, 44, 54, via wire 23, so that the user can toggle between music selections, toggle between the music player or the mobile phone, control volume, or the like.

As shown, article 100 also include one or more wires 20, 22, 26, 34, 36 embedded (e.g., formed, prepared, or otherwise sewn) therein for communicating an audio signal 13, 15, 17, 60 from a first point to a second point. For example, jacket 100 or backpack 105 can be formed with one or more channels 21 for holding a wire that connects the audio delivery device to a coupling device 28, 44. Channels 21 can be a separate piece of fabric that is sewn to the inside portion 110 for the entire length of the corresponding wire. Alternatively, the one or more channels 21 can comprise holes, notches, or clips on in the inside portion 110 or outside portion 115, which can secure the one or more wires at specific points. In any event, there need not necessarily be a wire and corresponding channel 21 for each device, or for an entire length of wire, used with the article, particularly where some devices may communicate to a coupling device 28, 44, 54 via wireless communication.

In addition, still another embodiment in accordance with the present invention includes an article 100, 105 including a first pocket 103a having an audio delivery device 16 inserted therein. Article 100, 105 also includes a second pocket 103b having a two-way communication device 18 inserted therein. Article 100, 105 still further includes a third pocket 103c for receiving an audio communication hub 28, 44, 54 which has one or more interfaces 45a-c for communicating with the audio delivery device and with the two-way communication device 18.

The audio communication hub 28, 44, 54 can be connected directly to each audio device via electrical wiring 20, 22, 26, 34, 36 embedded in the article 100, 105; or can be connected wirelessly via any number of wireless communication protocols. For example, as previously stated, article 100, 105 can include one or more channels 21 formed therein for receiving at least one communication wire 20, 22, 26, 34, 36. Alternatively, article 100 can be configured to provide electrical communication via wires only to the mobile phone 18 or to the audio delivery device 16, and be further configured communicate with a communication hub 28, 44 using Bluetooth, or another wireless communication protocol.

Accordingly, there are a number of ways in which a personal article can be configured to integrate multiple forms of audio communication, to thereby fuse various devices and protocols with wearable materials. In particular, in addition to jackets, backpacks, belt packs, or helmets, other articles that can integrate this technology include shirts, pants, shoes, eyewear, goggles, sunglasses, caps, or the like. Furthermore, as audio and switching devices become smaller and more lightweight, the options for incorporating the portable integration technology into other wearable items are essentially limitless.

The described embodiments are to be considered in all respects only as illustrative, and not restrictive. The scope of the invention is, therefore, indicated by the appended claims, rather than by the foregoing description. All changes within the meaning and range of equivalency of the claims are to be embraced within their scope.

## Claims

1. An integrated article of manufacture having one or more apparatus embedded therein for integrating a two-way communication device and an audio delivery device, comprising:
any of an article of clothing or a backpack configured to include: a coupling device (44) having:
a first interface (45a) for receiving a first audio signal from an arbitrarily selectable audio delivery device (16);
a second interface (45b) for receiving a second audio signal from an arbitrarily selectable two-way communication device (18), preferably a mobile phone;
a third interface (45c) for transmitting a third (60) audio signal comprising at least one of the first and second audio signals;
wherein the first interface (45a) is a wireless interface for receiving or transmitting wireless communication with said audio delivery device and/or wherein the second interface (45b) is configured with wireless communication means for communicating audio signals to or from the two-way communication device (18),
wherein said article (100, 105) of clothing or a backpack includes an inside portion (110) and an outside portion (115),
wherein said article of clothing or a backpack includes a number of interfaces (120) attached to the outside portion (115) for controlling any number of functions associated with said two-way communication device and/or with said audio delivery device,
wherein the interfaces (120) attached to the outside portion (115) are communicably coupled to the coupling device (44) via wireless communication means,
wherein the interfaces (120) attached to the outside portion (115) especially provide direct communicative access to a switch (58) or a volume controller (72) inserted in a pocket or sewn into a sleeve, or directly coupled thereto,
and an acoustic device (30, 32) for converting the third audio signal to an acoustic wave having an audio range corresponding to a hearing range of a user.

2. The article as recited in claim 1, further comprising a first switch (58) for selectively switching between the first and second audio signals to provide the third audio signal and further comprising a mixer (66) for mixing the first and second audio signals to create the third audio signal and further comprising a microphone (29) for transmitting a voice signal (17) to the two-way communication device.

3. The article as recited in any of the preceding claims, further comprising a volume controller (72) for selectively controlling the volume of at least one of the first and second audio signals.

4. The article as recited in claim 1, 2 or 3, wherein the coupling device (28) acts as a controller and/or hub to route signals (13, 15, 17), especially at least one audio input signal (17) and/or at least one audio output signal (13, 15), to the acoustic device (30, 32), such as preferably headphones (30, 32), earphones (30, 32), speakers (30, 32), or the like.

5. The article as recited in any of the preceding claims, comprising at least one of the following features:
a) wherein the coupling device (28) comprises a microphone (29) to transmit a voice or other audio signal (17) back to the communication device (18), thus preferably providing a hands free set (29, 30, 32) which is usable with the communication device (18), wherein preferably the coupling device (28) contains one or several apertures to permit an acoustic wave to directly enter and drive the microphone (29),
b) wherein the coupling device (28) comprises a switch (68) or other control device to control features of the communication device (18), the audio device (16), or a combination thereof, wherein preferably the switch (68) connects signal inputs (17) and signal outputs (15) of the communication device (18) together or connects them to a ground (70) or provides control signals to the device (18), to control features of the communication device (18), wherein preferably the switch (68) or control device controls features of the communication device (18) such as performing a mute command, a call connect command, a call disconnect command, voice-activated dialing, a command to call the last number dialed, or like features,
c) wherein the coupling device (28) includes a volume controller (72) to control the volume of at least one of the audio signals (13, 15) from the audio device (16) and the communication device (18), wherein preferably, when a call is received or placed on the communication device (18), a user may adjust the volume of the audio signal (13) using the volume controller (72), so that preferably a user may simultaneously hear and monitor both devices through a single acoustic device (30, 32), or may preferably adjust the volume of at least one of the devices (16, 18) when desired,
d) wherein the coupling device (28) includes a mixer (66) to mix the audio signals (13, 15) originating from the audio and communication devices (16,18), wherein the mixer (66) preferably provides that or wherein audio signals (13, 15) may be heard simultaneously by a user through the acoustic device (30, 32).

6. The article as recited in any of the preceding claims, further comprising one or more transceivers (76, 78) for passing one or more audio signals from a coupling device and any one or more of the audio delivery device, the two-way communication device, and the acoustic device.

7. The article as recited in any of the preceding claims, the coupling device containing at least one of a microphone (29), a switch (58), a mixer (66), and a volume controller (72).

8. The article as recited in claim 1, wherein the inside portion further includes one or more receptacles configured to receive a first transceiver (76) and a second transceiver (78), the first and second transceivers being configured to communicate wireless audio signals.

9. The article as recited in any of the claims 1 to 8, wherein the third interface (45c) can also send the third audio signal wirelessly, where appropriate, to corresponding acoustic devices.

10. The article as recited in any of the claims 1 to 9, wherein the article is one of a jacket or a belt pack.

11. The article as recited in any of the claims 1 to 10,
further including a coupling device (28) divided into a pair of components (28a, 28b) that wirelessly communicate with one another over one or more individual or combined interfaces (45c) using a technology such as Bluetooth.

12. The article as recited in claim 11,
wherein a first component (28a) of the pair of components (28a, 28b) includes a transceiver (28a) receptive to the signals (13, 15, 17) from the audio and communication devices (16, 18).

## Patentansprüche

1. Ein integrierter Produktionsartikel mit einem oder mehreren darin eingebetteten Geräten zur Einbeziehung einer Gegensprech-Kommunikationsvorrichtung und einem Audioübertragungsgerät, welcher folgendes aufweist:
ein Bekleidungsstück oder einen Rucksack, die so ausgelegt sind, dass sie folgendes umfassen:
eine Koppelvorrichtung (44), die folgendes aufweist:
eine erste Schnittstelle (45a) zum Empfangen eines ersten Tonsignals von einem nach Belieben wählbaren Audioübertragungsgerät (16);
ein zweite Schnittstelle (45b) zum Empfangen eines zweiten Tonsignals von einer nach Belieben wählbaren
Gegensprech-Kommunikationsvorrichtung (18), vorzugsweise einem Mobiltelefon;
eine dritte Schnittstelle (45c) zum Übertragen eines dritten (60) Tonsignals, welches zumindest das erste oder das zweite Tonsignal umfasst;
bei welchem die erste Schnittstelle (45a) eine drahtlose Schnittstelle zum Empfangen oder Übertragen einer drahtlosen Kommunikation mit dem Audioübertragungsgerät ist und/oder bei welchem die zweite Schnittstelle (45b) mit einer Einrichtung zur drahtlosen Kommunikation zur Übermittlung von Tonsignalen zu oder von der Gegensprech-Kommunikationsvorrichtung (18) ausgelegt ist,
wobei das Kleidungsstück (100, 105) bzw. ein Rucksack einen innen liegenden Abschnitt (110) und einen außen liegenden Abschnitt (115) aufweist,
wobei das Kleidungsstück bzw. ein Rucksack eine Reihe von Schnittstellen (120) umfasst, die zum Steuern einer beliebigen Anzahl von Funktionen an dem außen liegenden Abschnitt (115) angebracht sind, welche mit der Gegensprech-Kommunikationsvorrichtung und/oder mit dem Audioübertragungsgerät verknüpft sind,
wobei die an dem außen liegenden Abschnitt (115) angebrachten Schnittstellen (120) in einer zur Kommunikation geeigneten Weise mit der Koppelvorrichtung (44) über eine Einrichtung zur drahtlosen Kommunikation gekoppelt sind,
wobei die an dem außen liegenden Abschnitt (115) angebrachten Schnittstellen (120) insbesondere für einen direkten kommunikativen Zugang zu einem Schalter (58) oder einem Lautstärkeregler (72) sorgen, der in eine Tasche geschoben wird oder in einen Ärmel eingenäht ist oder direkt mit diesem gekoppelt ist,
und eine Akustikvorrichtung (30, 32) zum Umwandeln des dritten Tonsignals in eine Schallwelle mit einem Hörbereich, der einem Hörbereich eines Benutzers entspricht.

2. Artikel nach Anspruch 1, welcher des Weiteren einen ersten Schalter (58) zum selektiven Umschalten zwischen dem ersten und dem zweiten Tonsignal aufweist, um so das dritte Tonsignal zu liefern, und welcher außerdem eine Mischstufe (66) aufweist, welche das erste und das zweite Tonsignal in der Weise mischt, dass sie das dritte Tonsignal bildet, und welcher außerdem ein Mikrofon (29) zum Übertragen eines Sprachsignals (17) an die Gegensprech-Kommunikationsvorrichtung aufweist.

3. Artikel nach einem der vorhergehenden Ansprüche, welcher des Weiteren einen Lautstärkeregler (72) zur selektiven Aussteuerung der Lautstärke mindestens des ersten oder des zweiten Tonsignals aufweist.

4. Artikel nach Anspruch 1, 2 oder 3, bei welchem die Koppelvorrichtung (28) als Steuerteil und/oder als Hub zum Leiten von Signalen (13, 15, 17) fungiert, insbesondere zum Leiten von mindestens Tonausgangssignal (13, 15), zu dem Akustikgerät (30, 32), wie beispielsweise vorzugsweise Kopfhörern (30, 32), Ohrhörern (30, 32), Lautsprechern (30, 32), oder dergleichen.

5. Artikel nach einem der vorhergehenden Ansprüche, welcher mindestens eines der folgenden Merkmale aufweist:
a) bei dem die Koppelvorrichtung (28) ein Mikrofon (29) zur Übertragung eines Sprachsignals oder eines anderen Tonsignals (17) zurück zur Kommunikationsvorrichtung (18) umfasst und somit vorzugsweise einen Freisprech-Gerätesatz (29, 30, 32) bildet, der in Verbindung mit der Kommunikationsvorrichtung einsetzbar ist, wobei die Koppelvorrichtung (28) vorzugsweise eine oder mehrere Öffnungen enthält, damit eine Akustikwelle direkt in das Mikrofon (29) eintreten und dieses ansteuern kann,
b) bei dem die Koppelvorrichtung (28) einen Schalter (68) oder eine andere Betätigungsvorrichtung zum Ansteuern von Funktionen der Kommunikationsvorrichtung (18), des Audiogeräts (16) oder einer Kombination aus beiden aufweist, wobei der Schalter vorzugsweise Signaleingänge (17) und Signalausgänge (15) der Kommunikationsvorrichtung (18) miteinander verbindet oder diese an Masse legt (70) oder Ansteuersignale an die Vorrichtung (18) liefert, um Funktionen der Kommunikationsvorrichtung (18) anzusteuern, wobei der Schalter (68) oder das Steuerteil vorzugsweise Funktionen der Kommunikationsvorrichtung (18) ansteuert wie die Ausführung eines Stummschalte-Befehls, eines Anwahlbefehls, eines Befehls zum Gesprächsabbruch, eines sprachgesteuerten Wählmodus, eines Befehls zum Aufrufen der letzten 5 gewählten Nummern oder ähnliche Funktionen,
c) bei welchem die Koppelvorrichtung (28) einen Lautstärkeregler (72) zur Aussteuerung der Lautstärke von mindestens einem der Tonsignale (13, 15) aus dem Audiogerät (16) und der Kommunikationsvorrichtung (18) umfasst, wobei ein Benutzer vorzugsweise dann, wenn ein Anruf eingeht oder auf die Kommunikationsvorrichtung (18) gelegt wird, die Lautstärke des Tonsignals (13) unter Verwendung des Lautstärkereglers (72) so einstellen kann, dass der Benutzer vorzugsweise über ein einziges Akustikgerät (30, 32) beide Geräte gleichzeitig hören und überwachen kann oder vorzugsweise die Lautstärke von mindestens einer der Vorrichtungen (16, 18) bei Bedarf einstellen kann,
d) bei welchem die Koppelvorrichtung (28) eine Mischstufe (66) zum Mischen der aus dem Audiogerät und der Kommunikationsvorrichtung (16, 18) kommenden Tonsignale (13, 15) umfasst, wobei die Mischstufe (66) vorzugsweise das Signal liefert oder wobei Tonsignale (13, 15) von einem Benutzer über das Akustikgerät (30, 32) gleichzeitig gehört werden können.

6. Artikel nach einem der vorhergehenden Ansprüche, welcher außerdem einen oder mehrere Transceiver (76, 78) aufweist, um ein oder mehrere Tonsignale aus einer Koppelvorrichtung und einem oder mehreren beliebigen Audioübertragungsgerät, der Gegensprech-Kommunikationsvorrichtung, und dem Akustikgerät weiterzuleiten.

7. Artikel nach einem der vorhergehenden Ansprüche, bei welchem die Koppelvorrichtung mindestens ein Mikrofon (29) oder einen Schalter (58) oder eine Mischstufe (66) oder einen Lautstärkeregler (72) aufweist.

8. Artikel nach Anspruch 1, bei welchem der innen liegende Abschnitt außerdem ein oder mehrere Aufnahmefächer aufweist, die so ausgelegt sind, dass sie einen ersten Transceiver (76) und einen zweiten Transceiver (78) aufnehmen können, wobei der erste und der zweite Transceiver zur Übertragung von drahtlosen Tonsignalen ausgelegt sind.

9. Artikel nach einem der Ansprüche 1 bis 8, bei welchem die dritte Schnittstelle (45c) gegebenenfalls auch das dritte Tonsignal drahtlos an entsprechende Akustikgeräte senden kann.

10. Artikel nach einem der Ansprüche 1 bis 9, bei welchem der Artikel eine Jacke oder eine Gürteltasche ist.

11. Artikel nach einem der Ansprüche 1 bis 10, welcher außerdem eine Koppelvorrichtung (28) aufweist, die in ein Paar Baugruppen (28a, 28b) aufgeteilt ist, die drahtlos über eine oder mehrere einzelne oder mit einander kombinierte Schnittstellen (45c) unter Einsatz einer Technik wie beispielsweise Bluetooth mit einander kommunizieren.

12. Artikel nach Anspruch 11, bei welchem eine erste Baugruppe (28a) aus dem Paar Baugruppen (28a, 28b) einen Transceiver (28a) umfasst, welcher zum Empfang von Signalen (13, 15, 17) aus dem Audiogerät und der Kommunikationsvorrichtung (16, 18) geeignet ist.

## Revendications

1. Article de fabrication intégré ayant un ou plusieurs appareils noyés dans celui-ci pour l'intégration d'un dispositif de communication à deux voies et d'un dispositif de délivrance audio, comprenant:
un quelconque d'un article de vêtement ou d'un sac à dos configuré pour inclure:
un dispositif de couplage (44) ayant:
une première interface (45a) pour recevoir un premier signal audio d'un dispositif de délivrance audio (16), pouvant être sélectionné arbitrairement;
une deuxième interface (45b) pour recevoir un deuxième signal audio d'un dispositif de communication à deux voies (18) pouvant être sélectionné arbitrairement, de préférence un téléphone mobile;
une troisième interface (45c) pour transmettre un troisième (60) signal audio comprenant au moins un des premier et deuxième signaux audio;
où la première interface (45a) est une interface sans fil pour la réception ou la transmission avec ledit dispositif de délivrance audio et/ou où la deuxième interface (45b) est configurée avec un moyen de communication sans fil pour la communication de signaux audio au ou du dispositif de communication à deux voies (18),
où ledit article (100, 105) de vêtement ou un sac à dos comprend une portion intérieure (110) et une portion extérieure (115),
où ledit article de vêtement ou un sac à dos comprend un nombre d'interfaces (120) fixées à la portion extérieure (115) pour commander n'importe quel nombre de fonctions associées audit dispositif de communication à deux voies et/ou audit dispositif de délivrance audio,
où les interfaces (120) fixées à la portion extérieure (115) sont couplées de manière communicable au dispositif de couplage (44) par un moyen de communication sans fil,
où les interfaces (120) fixées à la portion extérieure (115) réalisent spécialement un accès de communication direct à un commutateur (58) ou un dispositif de commande de volume (72) inséré dans une poche ou cousu dans un manchon, ou couplé directement à celui-ci,
et un dispositif acoustique (30, 32) pour convertir le troisième signal audio en une onde acoustique ayant une plage audio correspondant à une plage d'écoute d'un utilisateur.

2. Article selon la revendication 1, comprenant en outre un premier commutateur (58) pour commuter sélectivement entre les premier et deuxième signaux audio pour fournir le troisième signal audio et comprenant en outre un mélangeur (66) pour mélanger les premier et deuxième signaux audio afin de créer le troisième signal audio, et comprenant en outre un microphone (29) pour la transmission d'un signal vocal (17) au dispositif de communication à deux voies.

3. Article selon l'une quelconque des revendications précédentes, comprenant en outre un dispositif de commande de volume (72) pour commander sélectivement le volume d'au moins un des premier et deuxième signaux audio.

4. Article selon la revendication 1, 2 ou 3, où le dispositif de couplage (28) agit comme un dispositif de commande et/ou hub pour le routage de signaux (13, 15, 17), spécialement au moins un signal d'entrée audio (17) et/ou au moins un signal de sortie audio (13, 15), au dispositif acoustique (30, 32), comme de préférence des casques (30, 32), des écouteurs (30, 32), des haut-parleurs (30, 32) ou analogue.

5. Article selon l'une quelconque des revendications précédentes, comprenant au moins une des caractéristiques suivantes:
a) où le dispositif de couplage (28) comprend un microphone (29) pour transmettre une voie ou un autre signal audio (17) à nouveau au dispositif de communication (18), en réalisant ainsi de préférence un kit mains-libres (29, 30, 32) qui peut être utilisé avec le dispositif de communication (18), où de préférence, le dispositif de couplage (28) possède une ou plusieurs ouvertures pour permettre à une onde acoustique d'entrer directement et d'entraîner le microphone (29),
b) où le dispositif de couplage (28) comprend un commutateur (68) ou autre dispositif de commande pour commander des propriétés du dispositif de communication (18), du dispositif audio (16) ou d'une combinaison de ceux-ci, où de préférence le commutateur (68) connecte les entrées de signaux (17) et les sorties de signaux (15) du dispositif de communication (18) ensemble ou les connecte à une masse (70) ou fournit des signaux de commande au dispositif (18), pour commander des propriétés du dispositif de communication (18), où de préférence le commutateur (68) ou le dispositif de contrôle commande les propriétés du dispositif de communication (18), comme l'exécution d'une commande mute, d'une commande de connexion d'appel, d'une commande de déconnexion d'appel, d'une composition à commande vocale, d'une commande pour appeler le dernier numéro appelé ou des propriétés analogues,
c) où le dispositif de couplage (28) comprend un dispositif de commande de volume (72) pour commander le volume d'au moins un des signaux audio (13, 15) du dispositif audio (16) et du dispositif de communication (18), où de préférence, lorsqu'un appel est reçu ou placé sur le dispositif de communication (18), un utilisateur peut ajuster le volume du signal audio (13) en utilisant le contrôleur de volume (72) de sorte que de préférence, un utilisateur peut simultanément écouter et surveiller les deux dispositifs par un seul dispositif acoustique (30, 32), ou meut de préférence ajuster le volume d'au moins un des dispositifs (16, 18), lorsqu'il le souhaite,
d) où le dispositif de couplage (28) comprend un mélangeur (66) pour mélanger les signaux audio (13, 15) sortant des dispositifs audio et de communication 16, 18), où le mélangeur (66) réalise de préférence que ou bien où les signaux audio (13, 15) peuvent être entendus simultanément par un utilisateur par le dispositif acoustique (30, 32).

6. Article selon l'une quelconque des revendications précédentes, comprenant en outre un ou plusieurs émetteurs-récepteurs (76, 78) pour faire passer un ou plusieurs signaux audio d'un dispositif de couplage et un quelconque ou plusieurs d'un dispositif de délivrance audio, du dispositif de communication à deux voix et du dispositif acoustique.

7. Article selon l'une quelconque des revendications précédentes, le dispositif de couplage contenant au moins un d'un microphone (29), d'un commutateur (58), d'un mélangeur (66) et d'un contrôleur de volume (72).

8. Article selon la revendication 1, dans lequel la portion intérieure comprend en outre un ou plusieurs réceptacles configurés pour recevoir un premier émetteur-récepteur (76) et un deuxième émetteur-récepteur (78), les premier et deuxième émetteurs-récepteurs étant configurés pour communiquer des signaux audio sans fil.

9. Article selon l'une quelconque des revendications 1 à 8, dans lequel la troisième interface (45c) peut également envoyer le troisième signal audio sans fil, lorsque cela est approprié, aux dispositifs acoustiques correspondants.

10. Article selon l'une quelconque des revendications 1 à 9, dans lequel l'article est un d'une veste ou d'une ceinture portable.

11. Article selon l'une quelconque des revendications 1 à 10, incluant en outre un dispositif de couplage (28) divisé en une paire de composants (28q, 28b) qui communiquent sans fil l'un avec l'autre par une ou plusieurs interfaces individuelles ou combinées (45c) en utilisant une technologie comme Bluetooth.

12. Article selon la revendication 11, où un premier composant (28a) de la paire de composants (28a, 28b) comprend un émetteur-récepteur (28a) réceptif aux signaux (13, 15, 17) des dispositifs audio et de communication (16, 18).
